# EUROPEAN PATENT APPLICATION

(11) **EP 4 266 092 A1**
(43) Date of publication of application: **25.10.2023**
(21) Application number: 21906056.3
(22) Date of filing: 18.08.2021
(51) Int. Cl.: G02B 5/18, G02F 3/00, G03H 1/02

(54) **OPTICAL COMPUTING SYSTEM**

(30) Priority: 18.12.2020 JP 2020210654
(71) Applicant: Fujikura Ltd., Tokyo 135-8512 (JP)
(72) Inventor: KUSAKA, Hiroyuki, Tokyo 135-8512 (JP); KASHIWAGI, Masahiro, Tokyo 135-8512 (JP)
(74) Representative: Plasseraud IP
(86) International application number: PCT/JP2021/030196
(87) International publication number: WO 2022/130691

(57) **Abstract**

Achieved is a light diffraction element that is capable of carrying out a plurality of different types of computing optically and in parallel. A light diffraction element (1) includes a plurality of cells (C) that have respective thicknesses or refractive indices set independently of each other. The plurality of cells (C) are divided into a plurality of blocks (B), and the plurality of blocks (B) each include at least (i) a first cell (C1) having a thickness or a refractive index which is set so that first optical computing is carried out and (ii) a second cell (C2) having a thickness or a refractive index which is set so that second optical computing is carried out.

## Description

### Technical Field

The present invention relates to a light diffraction element which carries out optical computing. Moreover, the present invention relates to an optical computing system which includes such a light diffraction element.

### Background Art

A light diffraction element is known that includes a plurality of microcells each of which has an individually set refractive index. This light diffraction element is designed to optically carry out predetermined computing by causing light beams which have passed through the microcells to mutually interfere with each other. Optical computing carried out with use of a light diffraction element has an advantage of achieving higher speed and lower electric power consumption as compared with electrical computing carried out with use of a processor. Patent Literature 1 discloses an optical neural network having an input layer, an intermediate layer, and an output layer. The light diffraction element described earlier can be used as, for example, an intermediate layer of such an optical neural network.

### Citation List

### [Patent Literature]

### [Patent Literature 1]

Specification of US Patent No. 7847225

### Summary of Invention

### Technical Problem

However, a conventional light diffraction element is merely capable of carrying out specific optical computing. That is, no light diffraction element has been achieved that carries out a plurality of different types of computing optically and in parallel.

An aspect of the present invention has been made in view of the problems described above and has an object to achieve a light diffraction element that is capable of carrying out a plurality of different types of computing optically and in parallel.

### Solution to Problem

A light diffraction element in accordance with an aspect of the present invention includes a plurality of cells that have respective thicknesses or refractive indices set independently of each other, the plurality of cells being divided into a plurality of blocks, and the plurality of blocks each including at least (i) a first cell having a thickness or a refractive index which is set so that first optical computing is carried out and (ii) a second cell having a thickness or a refractive index which is set so that second optical computing is carried out.

### Advantageous Effects of Invention

An aspect of the present invention makes it possible to achieve a light diffraction element that is capable of carrying out a plurality of different types of computing optically and in parallel.

### Brief Description of Drawings

Fig. 1 is a plan view illustrating a configuration of a light diffraction element in accordance with an embodiment of the present invention.
Fig. 2 is a plan view illustrating a part of the light diffraction element of Fig. 1 in which part first optical computing is carried out.
Fig. 3 is a plan view illustrating a part of the light diffraction element of Fig. 1 in which part second optical computing is carried out.
Fig. 4 is an enlarged perspective view of a part of the light diffraction element illustrated in Fig. 1.
Fig. 5 is a perspective view illustrating a main part configuration of a first optical computing system including the light diffraction element illustrated in Fig. 1.
Fig. 6 is a perspective view illustrating a main part configuration of a second optical computing system including the light diffraction element illustrated in Fig. 1.

### Description of Embodiments

### [Configuration of light diffraction element]

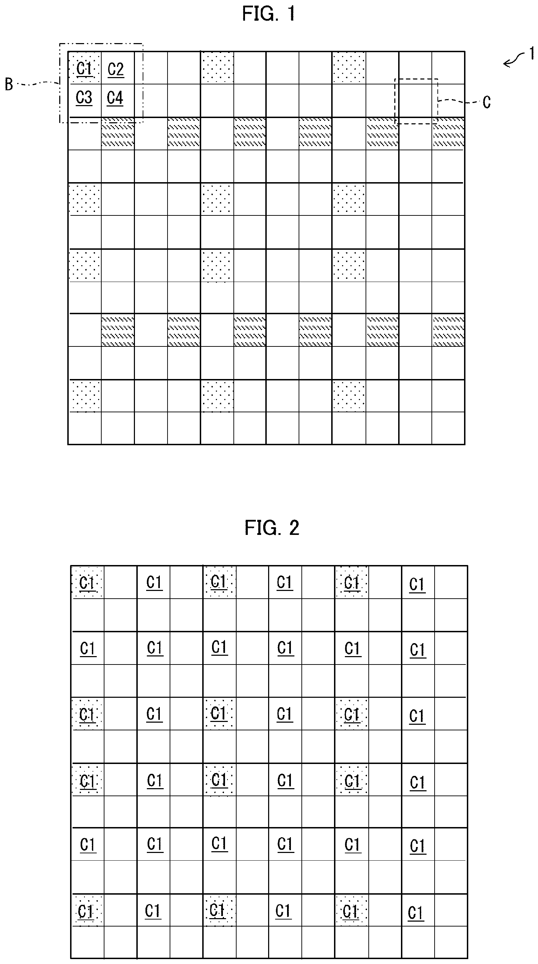

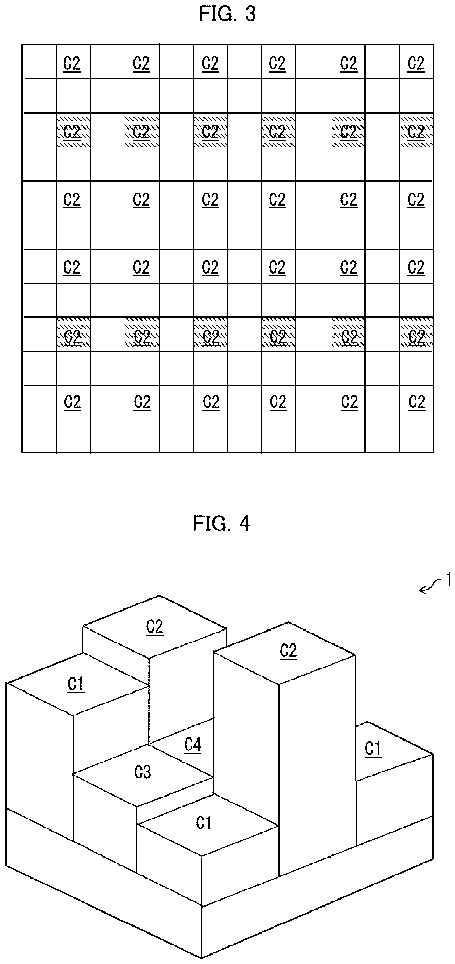

The following description will discuss, with reference to Figs. 1 to 4, a configuration of a light diffraction element 1 in accordance with an embodiment of the present invention. Fig. 1 is a plan view of the light diffraction element 1. Fig. 2 is a plan view illustrating a part of the light diffraction element 1 in which part first optical computing is carried out. Fig. 3 is a plan view illustrating a part of the light diffraction element 1 in which part second optical computing is carried out. Fig. 4 is an enlarged perspective view of a part of the light diffraction element 1.

The light diffraction element 1 is a planar light diffraction element and is constituted by a plurality of microcells (an example of "cells" in Claims) that have respective thicknesses or refractive indices set independently of each other. Note here that the term "microcell" refers to, for example, a cell having a cell size of less than 10 pm. The term "cell size" refers to a square root of an area of a cell. For example, in a case where a microcell has a square shape in a plan view, the cell size is a length of one side of the cell. The cell size has a lower limit that is not particularly limited and can be, for example, 1 nm.

The light diffraction element 1 illustrated in Fig. 1 has, for example, a square shape having a size of 12 pm × 12 pm in a plan view. The light diffraction element 1 is constituted by 12 × 12 microcells C that are arranged in a matrix pattern. Each of the microcells C has, for example, a square shape having a size of 1 pm × 1 pm in a plan view. The light diffraction element 1 is divided into 6 × 6 blocks B that are arranged in a matrix pattern. Each of the blocks B has, for example, a square shape having a size of 2 pm × 2 pm in a plan view. Each of the blocks B includes 2 × 2 microcells C that are arranged in a matrix pattern.

In a case where each of the blocks B of the light diffraction element 1 is constituted by K microcells C, up to K types of optical computing can be carried out by the light diffraction element 1. Note here that K is any natural number that is not less than 2. The light diffraction element 1 illustrated in Fig. 1 carries out the first optical computing and the second optical computing (optical computing different from the first optical computing). The first optical computing is carried out by mutual interference between light beams that have passed through microcells C1 located at the upper left of the respective blocks B. The second optical computing is carried out by mutual interference between light beams that have passed through microcells C2 located at the upper right of the respective blocks B. Fig. 2 illustrates an extraction of only the cells C1 of the light diffraction element 1 in which cells C1 the first optical computing is carried out. Fig. 3 illustrates an extraction of only cells C2 of the light diffraction element 1 in which cells C2 the second optical computing is carried out. Note that though not carried out in the present embodiment, not only third optical computing that is carried out by mutual interference between light beams which have passed through microcells C3 located at the lower left of the respective blocks B but also fourth optical computing that is carried out by mutual interference between light beams which have passed through microcells C4 located at the lower right of the respective blocks B can be carried out. In a case where signal light indicates an image, specific examples of the first optical computing and the second optical computing include convolution operation.

Examples of a method for independently setting, for each cell, phase-change amounts of light beams that pass through the microcells constituting the light diffraction element 1 include (1) a method of independently setting a thickness of a microcell for each microcell and (2) a method of independently selecting a refractive index of a microcell for each microcell. Specific examples of the method of independently selecting a refractive index of a microcell for each microcell include a method of independently selecting a material of a microcell for each microcell. The present embodiment employs the method (1), which can be carried out by nanoimprinting. In this case, as illustrated in Fig. 4, each of the microcells C1 and C2 is constituted by a pillar that has a quadrangular prism shape and that has a square bottom surface. Furthermore, in this case, a phase-change amount of light that passes through a microcell is determined in accordance with a height of the pillar. That is, the light that passes through the microcell which is constituted by a pillar having a high height has a large phase-change amount, and the light that passes through the microcell which is constituted by a pillar having a low height has a small phase-change amount.

The light diffraction element 1 is designed as below. First, a thickness or a refractive index of a microcell C1 included in each of the blocks B is set so that the first optical computing is carried out, in response to entry of light into the blocks B of the light diffraction element 1, by mutual interference between light beams which have passed through the microcells C1. It is assumed in this case that microcells C2, C3, and C4 included in each of the blocks B are masked. Subsequently, a thickness or a refractive index of a microcell C2 included in each of the blocks B is set so that the second optical computing is carried out, in response to entry of light into the blocks B of the light diffraction element 1, by mutual interference between light beams which have passed through the microcells C2. It is assumed in this case that the microcells C1, C3, and C4 included in each of the blocks B are masked. With this configuration, it is possible to achieve the light diffraction element 1 that carries out the first optical computing and the second optical computing in response to entry of light into the blocks B.

Note that the thickness or the refractive index of the microcell C1 included in each of the blocks B can be set, for example, with use of machine learning. A model used in the machine learning can be, for example, a model in which an intensity distribution of light that enters the blocks B is an input and an intensity distribution of light generated by mutual interference between light beams that have passed through the microcells C1 included in the respective blocks B is an output and which includes, as a parameter, the thickness or the refractive index of the microcell C1 included in each of the blocks B. Note that a thickness or a refractive index of a microcell C2 included in each of the blocks B can be similarly set with use of machine learning.

### [Configuration of first optical computing system]

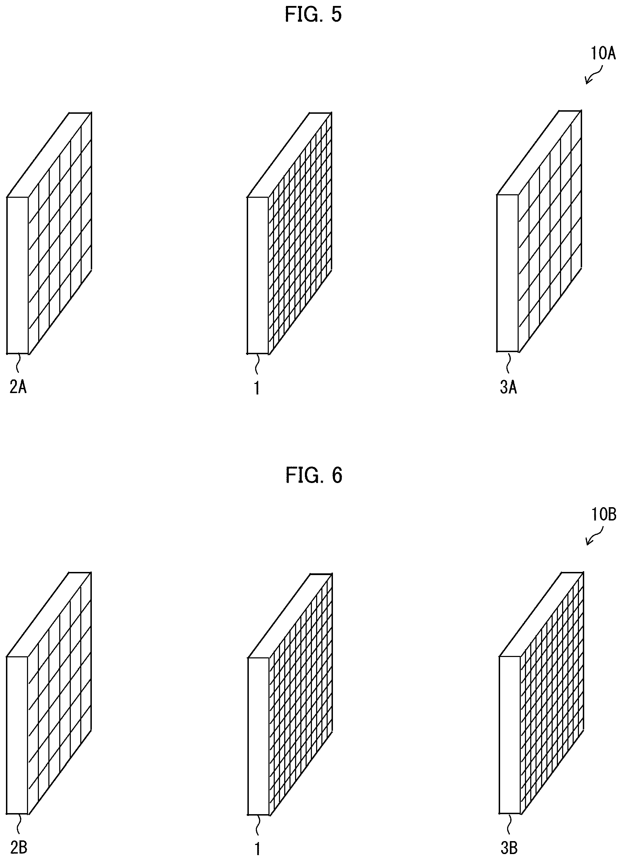

The light diffraction element 1 can be used as a computing element that carries out different types of optical computing in parallel. Fig. 5 is a perspective view illustrating a main part configuration of an optical computing system 10A that uses the light diffraction element 1 as such a computing element.

The optical computing system 10A includes not only the light diffraction element 1 but also a light-emitting device 2A and a light-receiving device 3A.

The light-emitting device 2A is a device for generating signal light that is to be input to the light diffraction element 1. The light-emitting device 2A has a plurality of light-emitting cells that are arranged in a matrix pattern, and is constituted by, for example, a two-dimensional display. The light-emitting cells of the light-emitting device 2A and the blocks B of the light diffraction element 1 are in a one-to-one correspondence. Light that has been output from each of the light-emitting cells of the light-emitting device 2A is input to a corresponding block B of the light diffraction element 1.

The light-receiving device 3A is a device for detecting signal light that has been output from the light diffraction element 1. The light-receiving device 3A has a plurality of light-receiving cells that are arranged in a matrix pattern, and is constituted by, for example, a two-dimensional image sensor. The light-receiving cells of the light-receiving device 3A and the blocks B of the light diffraction element 1 are in a one-to-one correspondence. Light that has passed through a microcell C1 of the light diffraction element 1 interferes mainly with light that has passed through another microcell C1 of the light diffraction element 1, and is input to each of the light-receiving cells of the light-receiving device 3A. Similarly, light that has passed through a microcell C2 of the light diffraction element 1 interferes mainly with light that has passed through another microcell C2 of the light diffraction element 1, and is input to each of the light-receiving cells of the light-receiving device 3A.

Thus, signal light that is detected by the light-receiving cells of the light-receiving device 3A indicates a sum of a result of the first optical computing and a result of the second computing. The result of the first optical computing is obtained by causing light beams that have passed through the microcells C1 of the light diffraction element 1 to mutually interfere with each other. The result of the second computing is obtained by causing light beams that have passed through the microcells C2 of the light diffraction element 1 to mutually interfere with each other. That is, the optical computing system 10A makes it possible to carry out a plurality of different types of optical computing and obtain a sum of results of these types of optical computing.

The present embodiment employs the configuration in which signal light that is output from the light diffraction element 1 is directly input to the light-receiving device 3A. Note, however, that the present invention is not limited to this configuration. For example, it is also possible to employ a configuration in which one or more other light diffraction elements is/are provided on an optical path of signal light that is output from the light diffraction element 1, and light that has passed through the other light diffraction element(s) is input to the light-receiving device 3A. In this case, a light diffraction element that has a lower resolution (a larger cell size) than the light diffraction element 1 is preferably disposed so as to follow the light diffraction element 1.

### [Configuration of second optical computing system]

The light diffraction element 1 can be used as a computing element that carries out different types of optical computing in parallel. Fig. 6 is a perspective view illustrating a main part configuration of an optical computing system 10B that uses the light diffraction element 1 as such a computing element.

The optical computing system 10B includes not only the light diffraction element 1 but also a light-emitting device 2B and a light-receiving device 3B.

The light-emitting device 2B is a device for generating signal light that is to be input to the light diffraction element 1. The light-emitting device 2B has a plurality of light-emitting cells that are arranged in a matrix pattern, and is constituted by, for example, a two-dimensional display. The light-emitting cells of the light-emitting device 2B and the blocks B of the light diffraction element 1 are in a one-to-one correspondence. Light that has been output from each of the light-emitting cells of the light-emitting device 2B is input to a corresponding block B of the light diffraction element 1.

The light-receiving device 3B is a device for detecting signal light that has been output from the light diffraction element 1. The light-receiving device 3B has a plurality of light-receiving cells that are arranged in a matrix pattern, and is constituted by, for example, a two-dimensional image sensor. The light-receiving cells of the light-receiving device 3B and the microcells C of the light diffraction element 1 are in a one-to-one correspondence. Light that has passed through a microcell C1 of the light diffraction element 1 interferes mainly with light that has passed through another microcell C1 of the light diffraction element 1, and is input mainly to light-receiving cells included in the light-receiving cells of the light-receiving device 3B and corresponding to the microcells C1. Similarly, light that has passed through a microcell C2 of the light diffraction element 1 interferes with light that has passed through another microcell C2 of the light diffraction element 1, and is input mainly to light-receiving cells included in the light-receiving cells of the light-receiving device 3B and corresponding to the microcells C2.

Thus, signal light that is detected by the light-receiving cells included in the light-receiving device 3B and corresponding to the microcells C1 indicates a result of the first optical computing which result is obtained by causing light beams that have passed through the microcells C1 of the light diffraction element 1 to mutually interfere with each other. Meanwhile, signal light that is detected by the light-receiving cells included in the light-receiving device 3B and corresponding to the microcells C2 indicates a result of the second optical computing which result is obtained by causing light beams that have passed through the microcells C2 of the light diffraction element 1 to mutually interfere with each other. That is, the optical computing system 10B makes it possible to carry out a plurality of different types of optical computing and obtain respective results of these types of optical computing.

The present embodiment employs the configuration in which signal light that is output from the light diffraction element 1 is directly input to the light-receiving device 3B. Note, however, that the present invention is not limited to this configuration. For example, it is also possible to employ a configuration in which one or more other light diffraction elements is/are provided on an optical path of signal light that is output from the light diffraction element 1, and light that has passed through the other light diffraction element(s) is input to the light-receiving device 3B. In this case, a light diffraction element that has a lower resolution (a larger cell size) than the light diffraction element 1 is preferably disposed so as to follow the light diffraction element 1.

Aspects of the present invention can also be expressed as follows:
A light diffraction element in accordance with a first aspect of the present invention includes a plurality of cells that have respective thicknesses or refractive indices set independently of each other, the plurality of cells being divided into a plurality of blocks, and the plurality of blocks each including at least (i) a first cell having a thickness or a refractive index which is set so that first optical computing is carried out and (ii) a second cell having a thickness or a refractive index which is set so that second optical computing is carried out.

With the above configuration, it is possible to carry out a plurality of different types of computing optically and in parallel.

An optical computing system in accordance with a second aspect of the present invention employs, in addition to the configuration in accordance with the first aspect, a configuration in which the plurality of cells of the light diffraction element are constituted by pillars that have respective heights set independently of each other.

With the above configuration, a nanoimprinting technique or the like can be used to easily produce a light diffraction element.

An optical computing system in accordance with a third aspect of the present invention includes: a light diffraction element in accordance with the first aspect or the second aspect; a light-emitting device that generates signal light to be input to the light diffraction element and that is constituted by light-emitting cells corresponding to the respective plurality of blocks of the light diffraction element; and a light-receiving device that detects the signal light to be output from the light diffraction element and that is constituted by light-receiving cells corresponding to the respective plurality of blocks of the light diffraction element.

With the above configuration, it is possible to optically obtain a sum of results of a plurality of different types of computing.

An optical computing system in accordance with a fourth aspect of the present invention includes: a light diffraction element in accordance with the first aspect or the second aspect; a light-emitting device that generates signal light to be input to the light diffraction element and that is constituted by light-emitting cells corresponding to the respective plurality of blocks of the light diffraction element; and a light-receiving device that detects the signal light to be output from the light diffraction element and that is constituted by light-receiving cells corresponding to the respective plurality of cells of the light diffraction element.

With the above configuration, it is possible to optically obtain respective results of a plurality of different types of computing.

### [Additional Remarks]

The present invention is not limited to the embodiments described above, but may be altered in various ways by a skilled person within the scope of the claims. Any embodiment based on a proper combination of technical means disclosed in the embodiments is also encompassed in the technical scope of the present invention.

### Reference Signs List

- 1: Light diffraction element
- B: Block
- C: Microcell
- 10A, 10B: Optical computing system
- 2A, 2B: Light-emitting device
- 3A, 3B: Light-receiving device

## Claims

1. A light diffraction element comprising a plurality of cells that have respective thicknesses or refractive indices set independently of each other,
the plurality of cells being divided into a plurality of blocks, and
the plurality of blocks each including at least (i) a first cell having a thickness or a refractive index which is set so that first optical computing is carried out and (ii) a second cell having a thickness or a refractive index which is set so that second optical computing is carried out.

2. The light diffraction element as set forth in claim 1, wherein the plurality of cells of the light diffraction element are constituted by pillars that have respective heights set independently of each other.

3. An optical computing system comprising:
a light diffraction element recited in claim 1 or 2;
a light-emitting device that generates signal light to be input to the light diffraction element and that is constituted by light-emitting cells corresponding to the respective plurality of blocks of the light diffraction element; and
a light-receiving device that detects the signal light to be output from the light diffraction element and that is constituted by light-receiving cells corresponding to the respective plurality of blocks of the light diffraction element.

4. An optical computing system comprising:
a light diffraction element recited in claim 1 or 2;
a light-emitting device that generates signal light to be input to the light diffraction element and that is constituted by light-emitting cells corresponding to the respective plurality of blocks of the light diffraction element; and
a light-receiving device that detects the signal light to be output from the light diffraction element and that is constituted by light-receiving cells corresponding to the respective plurality of cells of the light diffraction element.
